# EUROPEAN PATENT SPECIFICATION

(11) **EP 3 983 754 B1**
(45) Date of publication and mention of the grant of the patent: **09.04.2025**
(21) Application number: 20840698.3
(22) Date of filing: 15.07.2020
(51) Int. Cl.: G01C 21/34, G01C 21/00, G01C 21/30, G01C 21/20, G01S 13/88, G01S 13/60, B60W 40/06, G01S 13/931

(54) **TERRAIN-SENSITIVE ROUTE PLANNING**
TERRAINSENSITIVE ROUTENPLANUNG
PLANIFICATION D'ITINÉRAIRE SENSIBLE AU TERRAIN

(30) Priority: 15.07.2019 US 201962874093 P
(43) Date of publication of application: 20.04.2022
(73) Proprietor: GPR, Inc., Somerville, MA 02143 (US)
(72) Inventor: FREEDMAN, Sanford, Chelmsford, MA 01824 (US); STANLEY, Byron, Newton, MA 02460 (US)
(74) Representative: Marks & Clerk LLP
(86) International application number: PCT/US2020/042052
(87) International publication number: WO 2021/011603

(56) References cited:
- EP-A2- 2 490 200
- GB-A- 2 552 028
- US-A1- 2011 238 457
- US-A1- 2012 109 508
- US-A1- 2012 232 787
- US-A1- 2013 030 605
- US-A1- 2013 082 857
- US-A1- 2014 121 964
- US-A1- 2016 003 621
- US-B2- 6 750 815

## Description

### FIELD OF THE INVENTION

The present invention relates, generally, to vehicle route planning and, more particularly, to vehicle route planning using surface-penetrating radar (SPR) systems.

### BACKGROUND

Various navigation systems have been developed to provide vehicle drivers with route planning between a specified originating location and a destination location. Generally, one or more routes are selected from a large database of roads. The navigation system typically includes one or more position-determining devices, such as a global positioning system (GPS) receiver, to indicate the current position of the vehicle relative to roads in the database. Conventionally, route planning is performed based on certain user-specified criteria, such as the shortest distance or fastest travel time. In off-road conditions, where vehicles are driven on unsurfaced roads or tracks - which may feature sand, gravel, mud, snow, rocks and other natural terrain - route planning utilizing conventional techniques remains challenging. For example, off-road travel may require specially equipped vehicles depending on the conditions and terrain; such considerations, however, are not taken into account by the conventional navigation techniques.

US 2013/0030605 A1 relates to a vehicle monitoring system that permits a user to designate some usage as personal, such that the location of the vehicle is not tracked. In calculating a route, the system may take into account a safety index (i.e., which route is safer). US 2016.0003621 A1 relates to an interactive system for use in connection with recreational vehicle usage. A server system includes an off-road trail database containing trail data, trail condition information, and points-of-interest information, as well as a trip mapping system accessible by any of a plurality of riders, allowing a rider to create a route based on the data in the off-road trip database.

Accordingly, there is a need for approaches that provide route planning based on the terrain conditions between a specified originating location and destination as well as the type of vehicle.

### SUMMARY

In accordance with the invention, there is provided: a navigation server for navigating a vehicle using surface penetrating radar as recited by claim 1; and a method of providing navigation services to a traveling vehicle as recited by claim 5.

The present disclosure generally relates to providing route planning to a vehicle (or vehicle driver) based on the type of vehicle and the terrain conditions between the originating location and destination. As used herein, the term "terrain" includes both surface and below-ground features. The invention employs a terrain monitoring system including an SPR system attached to the vehicle for obtaining SPR signals as the vehicle travels along a route; the obtained SPR signals are used for navigation against reference images associated with the route. A navigation server bases route selection in part on the terrain associated with various routes and characteristics of the vehicle.

In various embodiments, a risk score is assigned to the subject vehicle. Risk scores are also associated with roadways (or roadway segments) stored in a route database, with values based on the associated terrain conditions. A terrain map may then be combined with the location map (or, in some embodiments, an existing map obtained from another source, such as GOOGLE MAPS) to include the locational information, terrain conditions and risk scores for various types of vehicles on each portion of the mapped routes. Terrain maps may also be fused with HD (high definition) maps used for autonomous vehicle navigation (in addition to consumer navigation maps such as those provided by GOOGLE MAPS).

In one example, an optimal route for traveling from a specific origin location to a destination for the subject vehicle can be identified. For example, the route from the origin to the destination that has a minimal total risk score for the specific type of vehicle may be determined to be the optimal route for the subject vehicle. The risk score can be considered against competing factors such as trip distance and tolls based on previously provided user preferences. Additionally or alternatively, other scores (e.g., energy-expenditure scores, probability-of-success scores, damage scores, wear scores, and/or loss-to-a-vehicle-subsystem scores) that may exacerbate the effects of the terrain conditions on the vehicle may be assigned based on detected SPR signals and/or other real-time information. Thus, for example, path planning may employ a conventional algorithm such as A-star (A*) or D-star (D*), once the scores or costs are calculated, to then determine the optimal path.

As disclosed herein, a navigation server comprises a route database comprising a digital map of locations and route segments connecting the locations, the route segments corresponding to roadways; a terrain database comprising terrain information associated with at least some of the route segments stored in the route database; a risk database relating a plurality of vehicle types to risk levels associated with a plurality of types of terrain; a processor; a network interface for receiving a route request over a network, the route request comprising a starting location, a destination, and a vehicle type; and a mapping module, executable by the processor, for retrieving data from the route database, the terrain database, and the risk database. Based on the retrieved data and the received route request, the processor identifies a risk-adjusted sequence of route segments from the starting location to the destination; the risk-adjusted route accounts for a terrain risk associated with the vehicle type. The processor is configured to cause the risk-adjusted route to be transmitted to a source of the route request via the network interface.

The risk database is organized to relate a plurality of vehicle types to associated terrain-related risk scores. The risk database may also be organized to relate the plurality of vehicle types to one or more of energy-expenditure scores, probability-of-success scores, damage scores, wear scores, or loss-to-a vehicle-subsystem scores associated with the vehicles. The assessment score assigned to each of the routes may have a plurality of values based on vehicle type, the optimal route also being based on a vehicle type.

Also disclosed herein is a method of providing navigation services to a traveling vehicle. In various embodiments, the method comprises maintaining, at a navigation server, (i) a route database comprising a digital map of locations and route segments connecting the locations, the route segments corresponding to roadways, (ii) a terrain database comprising terrain information associated with at least some of the route segments stored in the route database, and (iii) a risk database relating a plurality of vehicle types to risk levels associated with a plurality of types of terrain; receiving, by the navigation server via a network interface, a route request from the traveling vehicle, the route request comprising a starting location, a destination, and a vehicle type; at the navigation server, retrieving data from the route database, the terrain database, and the risk database and computing, based on the retrieved data and the received route request, a risk-adjusted sequence of route segments from the starting location to the destination, the risk-adjusted route accounting for a terrain risk associated with the vehicle type; and causing the risk-adjusted route to be transmitted to the traveling vehicle.

The risk database is organized to relate a plurality of vehicle types to associated terrain-related risk scores. The risk database may be organized to relate the plurality of vehicle types to one or more of energy-expenditure scores, probability-of-success scores, damage scores, wear scores, or loss-to-a vehicle-subsystem scores associated with the vehicles. In some embodiments, the assessment score assigned to each of the routes has a plurality of values based on vehicle type, and the optimal route is also based on a vehicle type.

Also disclosed herein is a method of operating a vehicle. In various embodiments, the method comprises wirelessly transmitting, by the vehicle to a navigation server, a route request from the traveling vehicle, the route request comprising a starting location, a destination, and a vehicle type; receiving, from the navigation server, a sequence of SPR images corresponding to a risk-adjusted sequence of route segments from the starting location to the destination, where the risk-adjusted route accounts for a terrain risk associated with a type of the vehicle; acquiring, with an SPR system, SPR images as the vehicle travels; and guiding the vehicle along the sequence of route segments based on computational comparison of the acquired SPR images with the received SPR images.

In various embodiments, the method further comprises computationally determining at least one of steering, orientation, velocity, pose, acceleration or deceleration associated with the vehicle based at least in part on the acquired SPR images. The method may further include controlling operation of the vehicle based at least in part on the determined steering, orientation, velocity, pose, acceleration and/or deceleration.

In some embodiments, the SPR system comprises a ground-penetrating radar (GPR) system. For example, the GPR system may comprise a GPR antenna array oriented in parallel to a ground surface.

### BRIEF DESCRIPTION OF THE DRAWINGS

The foregoing and the following detailed description will be more readily understood when taken in conjunction with the drawings, in which:
FIG. 1A schematically illustrates an exemplary traveling vehicle including a terrain monitoring system in accordance with embodiments of the invention.
FIG. 1B schematically illustrates an alternative configuration in which the antenna of the terrain monitoring system is closer to or in contact with the surface of the road.
FIG. 2 schematically depicts an exemplary terrain monitoring system in accordance with embodiments of the invention.
FIG. 3 schematically depicts a navigation server in accordance with embodiments of the invention.

### DETAILED DESCRIPTION

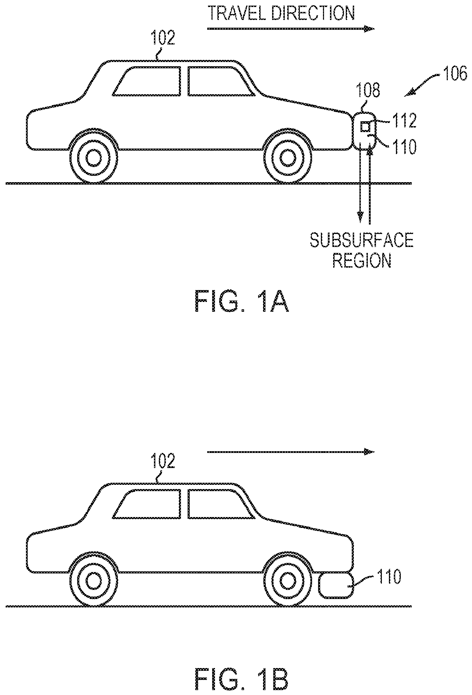

Refer first to FIG. 1A, which depicts an exemplary vehicle 102 traveling on a predefined route 104; the vehicle 102 is provided with a terrain monitoring system 106 for vehicle navigation in accordance herewith. In various embodiments, the terrain monitoring system 106 includes an SPR system 108 having a ground-penetrating radar (GPR) antenna array 110 fixed to the front (or any suitable portion) of the vehicle 102. The GPR antenna array 110 is generally oriented parallel to the ground surface and extends perpendicular to the direction of travel. In an alternative configuration, the GPR antenna array 110 is closer to or in contact with the surface of the road (FIG. 1B). In one embodiment, the GPR antenna array 110 includes a linear configuration of spatially-invariant antenna elements for transmitting GPR signals to the road; the GPR signals may propagate through the road surface into the subsurface region and be reflected in an upward direction. The reflected GPR signals can be detected by the receiving antenna elements in the GPR antenna array 110. In various embodiments, the detected GPR signals are then processed and analyzed for generating one or more SPR images (e.g., GPR images) of the subsurface region along the track of the vehicle 102. If the SPR antenna array 110 is not in contact with the surface, the strongest return signal received may be the reflection caused by the road surface. Thus, the SPR images may include surface data, i.e., data for the interface of the subsurface region with air or the local environment. Suitable GPR antenna configurations and systems for processing GPR signals are described, for example, in U.S. Patent No. 8,949,024.

For navigation, the SPR images are compared to SPR reference images that were previously acquired and stored for subsurface regions that at least partially overlap the subsurface regions for the defined route. The image comparison may be a registration process based on, for example, correlation; see, e.g., U.S. Patent No. 8,786,485. The location of the vehicle 102 and/or the terrain conditions of the route 104 can then be determined based on the comparison. In some embodiments, the detected GPR signals are combined with other real-time information, such as the weather conditions, electro-optical (EO) imagery, vehicle health monitoring using one or more sensors employed in the vehicle 102, and any suitable inputs, to estimate the terrain conditions of the route 104. In this way, the vehicle 102 may be used to create terrain maps for specific route segments that will be used in navigation as described below. The estimated terrain conditions may advantageously provide real-world terrain modeling as well as reduced computational expenses and/or complexity for modeling the terrain/vehicle interaction in real-time.

Based on the determined terrain conditions, a risk score is assigned to the route 104 or to various types of vehicles that might be driven on the route 104. The risk score is adjusted for the type of vehicle. For example, if the route 104 includes rough rocks, a high risk score (e.g., 7) may be assigned to a two-wheel steering vehicle, while a low risk score (e.g., 3) may be assigned to a four-wheel steering vehicle. Additionally or alternatively, other scores (e.g., energy-expenditure scores, probability-of-success scores, damage scores, wear scores, and/or loss-to-a-vehicle-subsystem scores) that may exacerbate the effects of the terrain conditions on the vehicle may be assigned based on detected SPR signals and/or other real-time information. The wear score may be subcategorized depending on the type of vehicle; for example, mining vehicles employ expensive tires, so tire wear may be a more important consideration than general vehicle wear and tear.

The risk scores, the terrain conditions and, if utilized, associated vehicle types may be stored along with the route 104 (or portion thereof) in a database. After the vehicle 102 and terrain monitoring system 108 have traveled multiple routes, a terrain map of the routes including their associated terrain conditions and risk scores (e.g., for various types of vehicles) may be created. Alternatively, the terrain map may include the collected terrain conditions of the routes only; the risk score associated with the specific vehicle may be assigned in real-time during route planning.

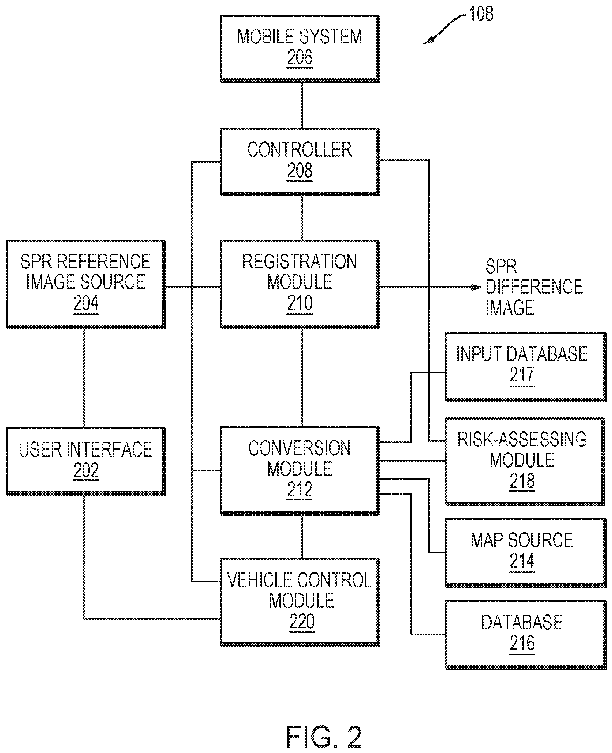

FIG. 2 depicts an exemplary terrain monitoring system (e.g., the SPR system 108) implemented in a vehicle 102 for establishing terrain-sensitive routes or navigating travel based on SPR images. The SPR system 108 may include a user interface 202 through which a user can enter data to define the route or select a predefined route. SPR images are retrieved from an SPR reference image source 204 according to the route. For example, the SPR reference image source 204 may be a local mass-storage device such as a Flash drive or hard disk; alternatively or in addition, the SPR reference image source 204 may be cloud-based (i.e., supported and maintained on a web server) and accessed remotely based on a current location determined by GPS. For example, a local data store may contain SPR reference images corresponding to the vicinity of the vehicle's current location, with periodic updates being retrieved to refresh the data as the vehicle travels.

The SPR system 108 also includes a mobile SPR system ("Mobile System") 206 having an SPR antenna array 110. The transmit operation of the mobile SPR system 206 is controlled by a controller (e.g., a processor) 208 that also receives the return SPR signals detected by the SPR antenna array 110. The controller 208 generates SPR images of the subsurface region below the road surface and/or the road surface underneath the SPR antenna array 110.

The SPR image includes features representative of structure and objects within the subsurface region and/or on the road surface, such as rocks, roots, boulders, pipes, voids and soil layering, and other features indicative of variations in the soil or material properties in the subsurface/surface region. In various embodiments, a registration module 210 compares the SPR images provided by the controller 208 to the SPR images retrieved from the SPR reference image source 204 to locate the vehicle 102 (e.g., by determining the offset of the vehicle with respect to the closest point on the route). In various embodiments, the locational information (e.g., offset data, or positional error data) determined in the registration process is provided to a conversion module 212 that creates a location map for navigating the vehicle 102. For example, the conversion module 212 may generate GPS data corrected for the vehicle positional deviation from the route.

Alternatively, the conversion module 212 may retrieve an existing map from a map source 214 (e.g., other navigation systems, such as GPS, or a mapping service), and then localize the obtained locational information to the existing map. In one embodiment, the location map of the predefined route is stored in a database 216 in system memory and/or a storage device accessible to the controller 208. Additionally or alternatively, the location data for the vehicle 104 may be used in combination with the data provided by an existing map (e.g., a map provided by GOOGLE MAPS) and/or one or more other sensors or navigation systems, such as an inertial navigation system (INS), a GPS system, a sound navigation and ranging (SONAR) system, a LIDAR system, a camera, an inertial measurement unit (IMU) and an auxiliary radar system, one or more vehicular dead-reckoning sensors (based on, e.g., steering angle and wheel odometry), and/or suspension sensors to guide the vehicle 102. For example, the controller 112 may localize the obtained SPR information to an existing map generated using GPS. Approaches for utilizing the SPR system for vehicle navigation and localization are described in, for example, the '024 patent mentioned above.

In some embodiments, the SPR reference images also include terrain conditions associated therewith. Thus, by comparing the obtained SPR images to the SPR reference images, the terrain conditions associated with the SPR reference images acquired from the predefined route may be determined. In some embodiments, the detected GPR signals/SPR images are combined with other real-time information, such as the weather conditions, EO imagery, vehicle health monitoring using one or more sensors employed in the vehicle 102, and any suitable inputs, to determine the terrain conditions of the route 104. These operations are useful in generating terrain-sensitive route maps. For example, route-based terrain conditions may be stored as a map, once again locally (in the map source 214), remotely (in a cloud server), or some combination (with a locally stored terrain map updated via wireless communication with the cloud server as the vehicle travels).

Terrain conditions and risk scores of various types of vehicles may be stored with the terrain map (in the map source 214) or in the database 216 as data associated with the various route components of maps in the map source 214. In one embodiment, a terrain-optimized route for traveling from a specific origin to a destination for the specific vehicle in which the system 108 is deployed can be identified using the database 216. For example, the route from the originating location to the destination that has a minimal total risk score for the currently driven vehicle may be determined to be the optimal route for this type of vehicle. In addition, the velocity, acceleration, orientation, angular velocity and/or angular acceleration of the vehicle 102 may be determined and continuously controlled based on the navigation map, so as to maintain the vehicle 102 to travel along the determined optimal route. It should be noted that the term "acceleration" as used herein includes linear and angular acceleration as well as higher-order derivatives such as jerk and jounce.

In other embodiments, terrain optimization represents an additional basis for route planning by an on-board navigation or mapping system, with vehicle-specific data being supplied remotely from a cloud server. That is, the subject vehicle does not itself include an SPR system, but the driver may obtain a terrain-optimized route from the vehicle's navigation system or an external service such as GOOGLE MAPS based on the type of vehicle and associated risk scores. A route-planning system may determine an optimal route that, for example, minimizes travel time but never exceeds a maximum tolerable risk score.

In some embodiments, the user defines or selects, via the user interface 202, other routes for the vehicle to travel. When the vehicle travels on the routes, the terrain monitoring system may, again, continuously acquire the SPR images, and based thereon determine the locational information and terrain conditions associated with each route, and assign risk scores to various types of vehicles on the routes. The locational information, terrain conditions and risk scores of the vehicles may be stored along with the respective route in the location map and terrain map as described above.

As noted above, terrain maps may be generated by vehicles equipped with systems 108 configured for obtaining SPR images and associating them with SPR and/or conventional maps. The determined terrain conditions may be provided to the conversion module 212 for creating a terrain map. In some embodiments, the SPR system 108 includes an input database 217 that continuously feeds other real-time information (i.e., other than the GPR signals/SPR images) detected by other systems to the conversion module 212 for updating and/or refining the terrain map. In one embodiment, a risk-assessment module 218 assigns risk scores to various types of vehicles based on the determined terrain conditions and the characteristics (e.g., the number of wheels powered by the engine, the size of the tires, the depth of the tire treads, ground clearance, suspension, etc.) of the vehicles. For example, if the route 104 includes rough rocks, a higher risk score (e.g., 7) may be assigned to a two-wheel steering vehicle, while a lower risk score (e.g., 3) may be assigned to a four-wheel steering vehicle. Similarly, a vehicle having large tires and deep tire treads may be assigned with a lower risk score than a vehicle having small tires and shallow tire treads. Again, the terrain conditions, risk scores and their associated types of vehicles may be stored along with the route in the database 216, elements of which may be provided periodically or on-demand to client vehicles as they travel and update their navigation maps.

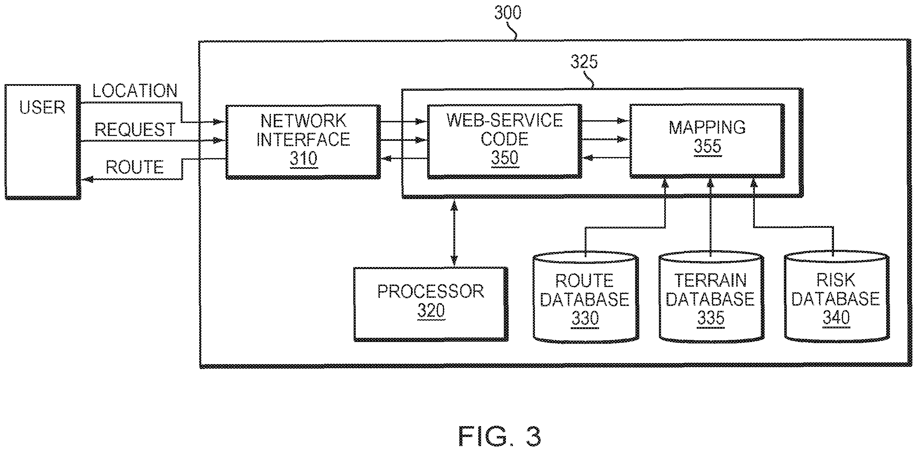

For example, as shown in FIG. 3, a navigation server 300 may receive a request comprising a vehicle location and a desired destination. The request may originate with the vehicle's own control system or a deployed application ("app") on the driver's personal device (such as a smart phone, tablet, etc.), and may also include a vehicle model or type. The navigation server 300 includes a wireless network interface 310, which receives the request and transmits route information after it is processed. The navigation server includes a processor 320 (e.g., a conventional CPU microprocessor), associated volatile system memory 325 and one or more non-volatile digital storage elements (such as a hard disk, Flash memory, optical drive, etc.). Stored in non-volatile memory are a route database 330, a terrain database 335, and a risk database 340. The route database 330 contains a digital map of locations and route segments connecting the locations; in general, the route segments correspond to roadways, i.e., vehicular thoroughfares. These may be represented by geospatial coordinates or by SPR images depending on the form of navigation desired. In the former case, routes are plotted in the manner of conventional map servers, such as GOOGLE MAPS. In the latter case, the route is defined by SPR images that are transmitted to the vehicle, which is equipped with an SPR system as described above to obtain SPR images during travel and compare these with the navigation images received from the navigation server 300.

The terrain database 335 contains terrain information associated with some or all of the route segments stored in the route database 330. This terrain information may be obtained using the vehicle-borne system illustrated in FIG. 2, and in embodiments where the route database 330 contains SPR images for navigation, may be extracted from these images as described, for example, in the '024 patent. The terrain information may, in some embodiments, be segmented into discrete types of terrain corresponding to levels of challenge for a vehicle. The risk database 340 relates a plurality of vehicle types to risk levels or scores (as described above) associated with a plurality of types of terrain. The risk database may include additional fields with data bearing on a risk score and tied to specific terrain and vehicle types, e.g., energy-expenditure data, probability-of-success data, damage data, wear data, and/or loss-to-a-vehicle-subsystem data.

In operation, the processor 320 executes one or more computer programs (conceptually illustrated as program modules) stored in the system memory 325. An operating system (such as, e.g., MICROSOFT WINDOWS, UNIX, LINUX, iOS, or ANDROID) provides low-level system functions, such as file management, resource allocation, and routing of messages from and to hardware devices and one or more higher-level applications including web server code 350 and a mapping module 355. The web server code 350 is conventional and facilitates web-based communication with the user via the network interface 310, receiving user-entered data and serving web pages containing maps and navigation information. The mapping module processes user requests by retrieving mapping data from the route database 330, terrain data from the terrain database 335, and risk-related data from the risk database 340 and computing, based on the retrieved data and the received route request, a risk-adjusted sequence of route segments from the starting location to the destination. The risk-adjusted route accounts for a terrain risk associated with the vehicle type. For example, in response to a request, the mapping module 355 may first obtain a series of candidate routes from the route database; each route is associated with a score based on, e.g., estimated travel time. This functionality is well-known and conventional. For each candidate route, the mapping module 355 may also obtain terrain information from the terrain database 335 and, based thereon, associated vehicle-specific risk data from the risk database 340. Based on this additional risk data, the candidate route scores may be adjusted and the routes ranked according to the adjusted scores. Thus, the navigation server 300 may combine route and terrain maps into a navigation map that reflects vehicle type and location, terrain conditions and the risk scores associated with the vehicle for each portion of various candidate routes. Based thereon, a terrain-optimized route may be computed for and delivered to the vehicle (via the web server code 350 and the network interface 310). Alternatively, a ranked series of candidate routes may be presented to the user, who may select a desired route. Based on the selection, geospatial or SPR route information from the route database 330 may be transmitted to the vehicle as it travels.

For example, the optimal route may correspond to a minimal total risk score and/or a minimal instantaneous risk score for the specific type of vehicle to travel thereon. In one embodiment, the identified optimal route is provided to a vehicle's navigation system for guiding the driver along the route. In another embodiment, the optimal route is provided to a vehicle control module 220 coupled to the controller 208 for autonomously operating the vehicle based thereon. For example, the vehicle control module 220 may include or cooperate with electrical, mechanical and pneumatic devices in the vehicle to control steering, orientation, velocity, pose and acceleration/deceleration of the vehicle.

The controller 208 implemented in the vehicle and the mapping module 355 implemented in the navigation server 300 may include one or more modules implemented in hardware, software, or a combination of both. For embodiments in which the functions are provided as one or more software programs, the programs may be written in any of a number of high level languages such as PYTHON, FORTRAN, PASCAL, JAVA, C, C++, C#, BASIC, various scripting languages, and/or HTML. Additionally, the software can be implemented in an assembly language directed to the microprocessor resident on a target computer; for example, the software may be implemented in Intel 80x86 assembly language if it is configured to run on an IBM PC or PC clone. The software may be embodied on an article of manufacture including, but not limited to, a floppy disk, a jump drive, a hard disk, an optical disk, a magnetic tape, a PROM, an EPROM, EEPROM, field-programmable gate array, or CD-ROM. Embodiments using hardware circuitry may be implemented using, for example, one or more FPGA, CPLD or ASIC processors.

The terms and expressions employed herein are used as terms and expressions of description and not of limitation, and there is no intention, in the use of such terms and expressions, of excluding any equivalents of the features shown and described or portions thereof. In addition, having described certain embodiments of the invention, it will be apparent to those of ordinary skill in the art that other embodiments incorporating the concepts disclosed herein may be used without departing from the scope of the invention. Accordingly, the described embodiments are to be considered in all respects as only illustrative and not restrictive.

## Claims

1. A navigation server (300) for navigating a vehicle (102) using surface penetrating radar, SPR, the navigation server comprising:
a processor (320);
a route database (330), having stored therein route data including SPR images representing a digital map of locations and route segments that correspond to roadways;
a terrain database (335) having stored therein terrain information extracted from the SPR images associated with the route segments stored in the route database (330);
a risk database (340) relating a plurality of vehicle types to risk levels associated with a plurality of types of terrain;
a network interface (310) for receiving a route request over a network, the route request comprising a starting location, a destination, and a vehicle type; and
a mapping module (355), executable by the processor (320), configured to process the route request by:
obtaining a plurality of candidate routes from the route database (330),
wherein each of the candidate routes is associated with a score;
obtaining terrain information from the terrain database (335) for each of the plurality of candidate routes;
obtaining vehicle-specific risk data from the risk database (340) based on the terrain information;
adjusting the score for each of the plurality of candidate routes based on the vehicle-specific risk data; and
ranking the plurality of candidate routes according to the adjusted scores;
wherein the processor (320) is configured to:
transmit the ranked plurality of candidate routes to the source of the route request for presenting to a user; and
based on a user selection of a candidate route, transmit SPR images from the route database (330) to a vehicle (102), wherein the transmitted SPR images define the selected candidate route.

2. The navigation server of claim 1, wherein the risk database (340) is organized to relate a plurality of vehicle types to associated terrain-related risk scores.

3. The navigation server of claim 1, wherein the risk database (340) is organized to relate the plurality of vehicle types to one or more of energy-expenditure scores, probability-of-success scores, damage scores, wear scores, or loss-to-a-vehicle-subsystem scores associated with the vehicles.

4. The navigation server of claim 1, wherein an assessment score assigned to each of the route segments has a plurality of values based on vehicle type, an optimal route also being based on the vehicle type.

5. A method of providing navigation services to a traveling vehicle (102), the method comprising:
maintaining, at a navigation server (300), (i) a route database (330) comprising a digital map of locations and route segments represented by surface-penetrating, SPR, images connecting the locations, the route segments corresponding to roadways, (ii) a terrain database (335) comprising terrain information extracted from the SPR images associated with the route segments stored in the route database, and (iii) a risk database (340) relating a plurality of vehicle types to risk levels associated with a plurality of types of terrain;
receiving, by the navigation server (300) via a network interface (310), a route request from the traveling vehicle (102), the route request comprising a starting location, a destination, and a vehicle type;
obtaining, by the navigation server (300), a plurality of candidate routes from the route database (330), wherein each of the candidate routes is associated with a score;
obtaining, by the navigation server (300), terrain information from the terrain database (335) for each of the plurality of candidate routes;
obtaining, by the navigation server (300), vehicle-specific risk data from the risk database (340) based on the terrain information;
adjusting, by the navigation server (300), the score for each of the plurality of candidate routes based on the vehicle-specific risk data;
ranking, by the navigation server (300), the plurality of candidate routes according to the adjusted scores;
transmitting, by the navigation server (300), the ranked plurality of candidate routes to the source of the route request for presenting to a user; and
based on a user selection of a candidate route, transmitting SPR images from the route database (330) to a vehicle (102), wherein the transmitted SPR images define the selected candidate route.

6. The method of claim 5, wherein the risk database (340) is organized to relate a plurality of vehicle types to associated terrain-related risk scores.

7. The method of claim 5 or claim 6, wherein the risk database (340) is organized to relate the plurality of vehicle types to one or more of energy-expenditure scores, probability-of-success scores, damage scores, wear scores, or loss-to-a vehicle-subsystem scores associated with the vehicles.

8. The method according to any one of claims 5 to 7, wherein an assessment score assigned to each of the route segments has a plurality of values based on vehicle type, an optimal route also being based on the vehicle type.

9. The method according to claim 5, further comprising:
wirelessly transmitting, by the vehicle (102) to the navigation server (300), the route request;
receiving, by the vehicle (102) from the navigation server (300), a sequence of SPR images corresponding to a risk-adjusted sequence of route segments from the starting location to the destination, the risk-adjusted route accounting for a terrain risk associated with a type of the vehicle;
acquiring, with an SPR system (108), SPR images as the vehicle (102) travels; and
guiding the vehicle (102) along the sequence of route segments based on computational comparison of the acquired SPR images with the received SPR images.

10. The method of claim 9, further comprising:
computationally determining at least one of steering, orientation, velocity, pose, acceleration or deceleration associated with the vehicle based at least in part on the acquired SPR images.

11. The method of claim 10, further comprising:
controlling operation of the vehicle (102) based at least in part on the determined steering, orientation, velocity, pose, acceleration and/or deceleration.

12. The method according to any one of claims 9 to 11, wherein the SPR system (108) comprises a ground-penetrating radar, GPR, system.

13. The method of claim 12, wherein the GPR system comprises a GPR antenna array (110) oriented in parallel to a ground surface.

## Patentansprüche

1. Navigationsserver (300) zum Navigieren eines Fahrzeugs (102) unter Verwendung von oberflächendurchdringendem Radar, SPR, wobei der Navigationsserver umfasst:
einen Prozessor (320);
eine Routendatenbank (330), in der Routendaten gespeichert sind, die SPR-Bilder einschließen, welche eine digitale Karte von Orten und Routensegmenten darstellen, die Fahrbahnen entsprechen;
eine Geländedatenbank (335), in der Geländeinformationen gespeichert sind, welche aus den SPR-Bildern extrahiert wurden, die mit den in der Routendatenbank (330) gespeicherten Routensegmenten verknüpft sind;
eine Risikodatenbank (340), die eine Vielzahl von Fahrzeugtypen mit Risikostufen, welche mit einer Vielzahl von Geländearten verknüpft sind, in Beziehung setzt;
eine Netzwerkschnittstelle (310) zum Empfangen einer Routenanfrage über ein Netzwerk, wobei die Routenanfrage einen Startort, ein Ziel und einen Fahrzeugtyp umfasst; und
ein Kartenmodul (355), das durch den Prozessor (320) ausführbar und dafür konfiguriert ist, die Routenanfrage zu verarbeiten durch:
Erlangen einer Vielzahl von Routenkandidaten aus der Routendatenbank (330), wobei jeder der Routenkandidaten mit einer Punktzahl verknüpft ist;
Erlangen von Geländeinformationen aus der Geländedatenbank (335) für jeden der Vielzahl von Routenkandidaten;
Erlangen fahrzeugspezifischer Risikodaten aus der Risikodatenbank (340) auf der Grundlage der Geländeinformationen;
Anpassen der Punktzahl für jeden der Vielzahl von Routenkandidaten auf der Grundlage der fahrzeugspezifischen Risikodaten; und
Einstufen der Vielzahl von Routenkandidaten gemäß den angepassten Punktzahlen;
wobei der Prozessor (320) dafür konfiguriert ist:
die eingestufte Vielzahl von Routenkandidaten zu der Quelle der Routenanfrage zur Präsentation für einen Benutzer zu übertragen; und
auf der Grundlage einer Benutzerauswahl eines Routenkandidaten SPR-Bilder von der Routendatenbank (330) zu einem Fahrzeug (102) zu übertragen, wobei die übertragenen SPR-Bilder den ausgewählten Routenkandidaten definieren.

2. Navigationsserver nach Anspruch 1, wobei die Risikodatenbank (340) dafür organisiert ist, eine Vielzahl von Fahrzeugtypen mit verknüpften geländeabhängigen Risikopunktzahlen in Beziehung zu setzen.

3. Navigationsserver nach Anspruch 1, wobei die Risikodatenbank (340) dafür organisiert ist, die Vielzahl von Fahrzeugtypen mit einer oder mehreren von folgenden mit den Fahrzeugen verknüpften Punktzahlen in Beziehung zu setzen: Energieverbrauchspunktzahlen, Erfolgswahrscheinlichkeitspunktzahlen, Schadenspunktzahlen, Verschleißpunktzahlen oder Punktzahlen für Verluste an einem Fahrzeugsubsystem.

4. Navigationsserver nach Anspruch 1, wobei eine jedem der Routensegmente zugewiesene Bewertungspunktzahl eine Vielzahl von Werten aufweist, die auf dem Fahrzeugtyp beruhen, wobei eine optimale Route ebenfalls auf dem Fahrzeugtyp beruht.

5. Verfahren zum Bereitstellen von Navigationsdiensten für ein fahrendes Fahrzeug (102), wobei das Verfahren umfasst:
in einem Navigationsserver (300) erfolgendes Pflegen von Folgendem: (i) einer Routendatenbank (330), die eine digitale Karte von Orten und Routensegmenten umfasst, die durch oberflächendurchdringende SPR-Bilder dargestellt werden, welche die Orte verbinden, wobei die Routensegmente Fahrbahnen entsprechen, (ii) einer Geländedatenbank (335), die Geländeinformationen umfasst, welche aus den SPR-Bildern extrahiert wurden, die mit den in der Routendatenbank gespeicherten Routensegmenten verknüpft sind, und (iii) einer Risikodatenbank (340), die eine Vielzahl von Fahrzeugtypen mit Risikostufen, welche mit einer Vielzahl von Geländearten verknüpft sind, in Beziehung setzt;
Empfangen einer Routenanfrage vom fahrenden Fahrzeug (102) durch den Navigationsserver (300) über eine Netzwerkschnittstelle (310), wobei die Routenanfrage einen Startort, ein Ziel und einen Fahrzeugtyp umfasst;
Erlangen einer Vielzahl von Routenkandidaten aus der Routendatenbank (330) durch den Navigationsserver (300), wobei jeder der Routenkandidaten mit einer Punktzahl verknüpft ist;
Erlangen von Geländeinformationen für jeden der Vielzahl von Routenkandidaten durch den Navigationsserver (300) aus der Geländedatenbank (335);
Erlangen von fahrzeugspezifischen Risikodaten durch den Navigationsserver (300) aus der Risikodatenbank (340) auf der Grundlage der Geländeinformationen;
Anpassen der Punktzahl für jeden der Vielzahl von Routenkandidaten durch den Navigationsserver (300) auf der Grundlage der fahrzeugspezifischen Risikodaten;
Einstufen der Vielzahl von Routenkandidaten durch den Navigationsserver (300) gemäß den angepassten Punktzahlen;
Übertragen der eingestuften Vielzahl von Routenkandidaten durch den Navigationsserver (300) zu der Quelle der Routenanfrage zur Präsentation für einen Benutzer; und
auf der Grundlage einer Benutzerauswahl eines Routenkandidaten, Übertragen von SPR-Bildern von der Routendatenbank (330) zu einem Fahrzeug (102), wobei die übertragenen SPR-Bilder den ausgewählten Routenkandidaten definieren.

6. Verfahren nach Anspruch 5, wobei die Risikodatenbank (340) dafür organisiert ist, eine Vielzahl von Fahrzeugtypen mit verknüpften geländeabhängigen Risikopunktzahlen in Beziehung zu setzen.

7. Verfahren nach Anspruch 5 oder 6, wobei die Risikodatenbank (340) dafür organisiert ist, die Vielzahl von Fahrzeugtypen mit einer oder mehreren von folgenden mit den Fahrzeugen verknüpften Punktzahlen in Beziehung zu setzen: Energieverbrauchspunktzahlen, Erfolgswahrscheinlichkeitspunktzahlen, Schadenspunktzahlen, Verschleißpunktzahlen oder Punktzahlen für Verluste an einem Fahrzeugsubsystem.

8. Verfahren nach einem der Ansprüche 5 bis 7, wobei eine jedem der Routensegmente zugewiesene Bewertungspunktzahl eine Vielzahl von Werten aufweist, die auf dem Fahrzeugtyp beruhen, wobei eine optimale Route ebenfalls auf dem Fahrzeugtyp beruht.

9. Verfahren nach Anspruch 5, ferner umfassend:
drahtloses Übertragen der Routenanfrage durch das Fahrzeug (102) zum Navigationsserver (300);
Empfangen einer Folge von SPR-Bildern, die einer risikoangepassten Folge von Routensegmenten vom Startort zum Ziel entsprechen, durch das Fahrzeug (102) vom Navigationsserver (300), wobei die risikoangepasste Route ein Geländerisiko berücksichtigt, das mit einem Fahrzeugtyp verknüpft ist;
Erfassen von SPR-Bildern mit einem SPR-System (108), während das Fahrzeug (102) fährt; und
Führen des Fahrzeugs (102) entlang der Folge von Routensegmenten auf der Grundlage eines rechnerischen Vergleichs der erfassten SPR-Bilder mit den empfangenen SPR-Bildern.

10. Verfahren nach Anspruch 9, ferner umfassend:
rechnerisches Bestimmen von mindestens einem der folgenden mit dem Fahrzeug verknüpften Parameter: Lenkung, Ausrichtung, Geschwindigkeit, Lage, Beschleunigung oder Verzögerung, und zwar mindestens teilweise auf der Grundlage der erfassten SPR-Bilder.

11. Verfahren nach Anspruch 10, ferner umfassend:
Steuern des Betriebs des Fahrzeugs (102) mindestens teilweise auf der Grundlage der bestimmten Lenkung, Ausrichtung, Geschwindigkeit, Lage, Beschleunigung und/oder Verzögerung.

12. Verfahren nach einem der Ansprüche 9 bis 11, wobei das SPR-System (108) ein System mit bodendurchdringendem Radar (OPR) umfasst.

13. Verfahren nach Anspruch 12, wobei das OPR-System eine OPR-Gruppenantenne (110) umfasst, die parallel zu einer Bodenoberfläche ausgerichtet ist.

## Revendications

1. Serveur de navigation (300) pour faire naviguer un véhicule (102) en utilisant un radar à pénétration du sol, SPR, le serveur de navigation comprenant :
un processeur (320) ;
une base de données d'itinéraires (330) comportant, stockées en son sein, des données d'itinéraire incluant des images SPR représentant une carte numérique de localisations et de segments d'itinéraire qui correspondent à des voies de circulation ;
une base de données de terrains (335) comportant, stockée en son sein, des informations de terrain extraites à partir des images SPR associées aux segments d'itinéraire stockés dans la base de données d'itinéraires (330) ;
une base de données de risques (340) rapportant une pluralité de types de véhicule à des niveaux de risques associés à une pluralité de types de terrain ;
une interface de réseau (310) pour recevoir une demande d'itinéraire sur un réseau, la demande d'itinéraire comprenant une localisation de départ, une destination et un type de véhicule ; et
un module de cartographie (355), pouvant être exécuté par le processeur (320), configuré pour traiter la demande d'itinéraire en :
obtenant une pluralité d'itinéraires candidats à partir de la base de données d'itinéraires (330), dans lequel chacun des itinéraires candidats est associé à un score ;
obtenant des informations de terrain à partir de la base de données de terrains (335) pour chacun de la pluralité d'itinéraires candidats ;
obtenant des données de risques spécifiques au véhicule à partir de la base de données de risques (340) sur la base des informations de terrain ;
réglant le score pour chacun de la pluralité d'itinéraires candidats sur la base des données de risques spécifiques au véhicule ; et
classant la pluralité d'itinéraires candidats en fonction des scores réglés ;
dans lequel le processeur (320) est configuré pour :
transmettre la pluralité classée d'itinéraires candidats à la source de la demande d'itinéraire pour une présentation à un utilisateur ; et
sur la base d'une sélection par utilisateur d'un itinéraire candidat, transmettre des images SPR en provenance de la base de données d'itinéraires (330) à un véhicule (102), dans lequel les images SPR transmises définissent l'itinéraire candidat sélectionné.

2. Serveur de navigation selon la revendication 1, dans lequel la base de données de risques (340) est organisée pour rapporter une pluralité de types de véhicule à des scores de risques rapportés au terrain associés.

3. Serveur de navigation selon la revendication 1, dans lequel la base de données de risques (340) est organisée pour rapporter la pluralité de types de véhicule à un ou plusieurs ensembles de scores parmi des scores de dépense énergétique, des scores de probabilité de succès, des scores de dommages, des scores d'usure et des scores de perte pour un sous-système de véhicule associés aux véhicules.

4. Serveur de navigation selon la revendication 1, dans lequel un score d'évaluation attribué à chacun des segments d'itinéraire présente une pluralité de valeurs basées sur le type de véhicule, un itinéraire optimum étant également basé sur le type de véhicule.

5. Procédé de fourniture de services de navigation à un véhicule en déplacement (102), le procédé comprenant :
le maintien, au niveau d'un serveur de navigation (300), (i) d'une base de données d'itinéraires (330) comprenant une carte numérique de localisations et de segments d'itinéraires représentés par des images de pénétration en surface, SPR, reliant les localisations, les segments d'itinéraires correspondant à des voies de circulation, (ii) une base de données de terrains (335) comprenant des informations de terrain extraites à partir des images SPR associées aux segments d'itinéraires stockés dans la base de données d'itinéraires et (iii) une base de données de risques (340) rapportant une pluralité de types de véhicule à des niveaux de risques associés à une pluralité de types de terrain ;
la réception, par le serveur de navigation (300) via une interface de réseau (310), d'une demande d'itinéraire en provenance du véhicule en déplacement (102), la demande d'itinéraire comprenant une localisation de départ, une destination et un type de véhicule ;
l'obtention, par le serveur de navigation (300), d'une pluralité d'itinéraires candidats à partir de la base de données d'itinéraires (330), dans lequel chacun des itinéraires candidats est associé à un score ;
l'obtention, par le serveur de navigation (300), d'informations de terrain en provenance de la base de données de terrains (335) pour chacun de la pluralité d'itinéraires candidats ;
l'obtention, par le serveur de navigation (300), de données de risques spécifiques au véhicule en provenance de la base de données de risques (340) sur la base des informations de terrain ;
le réglage, par le serveur de navigation (300), du score pour chacun de la pluralité d'itinéraires candidats sur la base des données de risques spécifiques au véhicule ;
le classement, par le serveur de navigation (300), de la pluralité d'itinéraires candidats en fonction des scores réglés ;
la transmission, par le serveur de navigation (300), de la pluralité classée d'itinéraires candidats à la source de la demande d'itinéraire pour une présentation à un utilisateur ; et
sur la base d'une sélection par utilisateur d'un itinéraire candidat, la transmission d'images SPR depuis la base de données d'itinéraires (330) à un véhicule (102), dans lequel les images SPR transmises définissent l'itinéraire candidat sélectionné.

6. Procédé selon la revendication 5, dans lequel la base de données de risques (340) est organisée pour rapporter une pluralité de types de véhicule à des scores de risques rapportés au terrain associés.

7. Procédé selon la revendication 5 ou la revendication 6, dans lequel la base de données de risques (340) est organisée pour rapporter la pluralité de types de véhicule à un ou plusieurs ensembles de scores parmi des scores de dépense énergétique, des scores de probabilité de succès, des scores de dommages, des scores d'usure et des scores de perte pour un sous-système de véhicule associés aux véhicules.

8. Procédé selon l'une quelconque des revendications 5 à 7, dans lequel un score d'évaluation attribué à chacun des segments d'itinéraire présente une pluralité de valeurs basées sur le type de véhicule, un itinéraire optimum étant également basé sur le type de véhicule.

9. Procédé selon la revendication 5, comprenant en outre :
la transmission sans fil, par le véhicule (102) au serveur de navigation (300), de la demande d'itinéraire ;
la réception, par le véhicule (102) en provenance du serveur de navigation (300), d'une séquence d'images SPR correspondant à une séquence réglée en termes de risques de segments d'itinéraire depuis la localisation de départ jusqu'à la destination, l'itinéraire réglé en termes de risques prenant en compte un risque de terrain associé à un type du véhicule ;
l'acquisition, avec un système SPR (108), d'images SPR lorsque le véhicule (102) se déplace ; et
le guidage du véhicule (102) le long de la séquence de segments d'itinéraire sur la base d'une comparaison informatique des images SPR acquises avec les images SPR reçues.

10. Procédé selon la revendication 9, comprenant en outre :
la détermination informatique d'au moins une information parmi la direction, l'orientation, la vitesse, la position, l'accélération ou la décélération associée au véhicule sur la base au moins en partie des images SPR acquises.

11. Procédé selon la revendication 10, comprenant en outre :
la commande du fonctionnement du véhicule (102) sur la base au moins en partie de la direction, de l'orientation, de la vitesse, de la position, de l'accélération et/ou de la décélération déterminée(s).

12. Procédé selon l'une quelconque des revendications 9 à 11, dans lequel le système SPR (108) comprend un système de radar à pénétration du sol, GPR.

13. Procédé selon la revendication 12, dans lequel le système GPR comprend un réseau d'antennes GPR (110) orienté parallèlement à une surface du sol.
